# EUROPEAN PATENT APPLICATION

(11) **EP 4 120 530 A1**
(43) Date of publication of application: **18.01.2023**
(21) Application number: 22738524.2
(22) Date of filing: 10.01.2022
(51) Int. Cl.: H02M 1/00

(54) **CURRENT SAMPLING CIRCUIT BASED ON BRIDGE CIRCUIT**

(30) Priority: 03.06.2021 CN 202110616474
(71) Applicant: ZHEJIANG EV-TECH CO., LTD., Zhejiang 313300 (CN)
(72) Inventor: XU, Chenting, Huzhou, Zhejiang 313300 (CN); TAO, Sili, Huzhou, Zhejiang 313300 (CN); HE, Qiang, Huzhou, Zhejiang 313300 (CN); PING, Dinggang, Huzhou, Zhejiang 313300 (CN)
(74) Representative: Von Rohr Patentanwälte Partnerschaft mbB
(86) International application number: PCT/CN2022/071113
(87) International publication number: WO 2022/252622

(57) **Abstract**

The present disclosure discloses a current sampling circuit based on a bridge circuit, which comprises a first rectifier bridge arm formed by a first switch tube and a second diode connected in series, and a second rectifier bridge arm formed by a second switch tube and a first diode connected in series, wherein the first rectifier bridge arm and the second rectifier bridge arm are connected in parallel, a common node of the first switch tube and the second diode forms a midpoint of the first rectifier bridge arm, and a common node of the second switch tube and the first diode forms a midpoint of the second rectifier bridge arm; a detection resistor unit is connected in parallel with the first rectifier bridge arm and the second rectifier bridge arm. In the present disclosure, the peak current controller is used to control the switching tube of the bridge unit and the rectifier circuit, which prevents the problem of reverse current occurring on the primary side of the transformer caused by the turning-on of the secondary side synchronous rectifier, effectively protects the circuit safety, and can control the interval of current sampling, so as to avoid sampling the negative current of the transformer and ensure the stability of the circuit operation.

## Description

### Cross-Reference to Related Application

The present disclosure claims priority of Chinese patent application with the filing number 202110616474.9 filed on June 3, 2021 with the Chinese Patent Office, and entitled "Current Sampling Circuit Based on Bridge Circuit", the contents of which are incorporated herein by reference in entirety.

### Technical Field

The present disclosure relates to the technical field of power electronics, and in particular, to a current sampling circuit based on a bridge circuit.

### Background Art

With the explosive growth of new energy vehicles, the demand for on-board charger and on-board DC-DC has also increased significantly. Due to the wide voltage range of on-board power battery and low-voltage storage battery, bridge DC-DC circuits that can simultaneously achieve wide-range input and wide-range output have been widely used. The control or protection of the bridge circuit needs to rely on the accurate sampling of the current waveform of the primary side of the transformer, the current transformer CT is used to perform sampling, which can achieve the demand such as high precision, low delay, and low cost, so it has been widely used.

However, when the bridge circuit uses synchronous rectifier, the reverse current will appear on the primary side of the transformer because the synchronous rectifier at the secondary side is turned on, and when a traditional CT circuit is used to perform sampling, the peak of induced current will be sampled, and the control (such as peak current control) or protection is triggered in advance, thereby resulting in the risk of abnormal circuit operation.

For example, Chinese patent application CN201220255724.7 discloses a circuit for realizing collection of positive and negative currents by using a single power supply. The circuit uses one power supply and one operational amplifier, and cooperates with peripheral circuits to realize the collection of different input currents, wherein specifically, the positive and negative currents are not distinguished, and all of them are collected. In this case, the control or protection is triggered in advance, thereby resulting in the risk of abnormal circuit operation.

### Summary

The present disclosure mainly solves the problem in the related art that the sampling circuit cannot distinguish the positive induced current of the transformer, which leads to abnormal operation of the circuit. The present disclosure provides a current sampling circuit based on a bridge circuit, which can control the interval of current sampling, thereby avoiding sampling the induced current of transformer, and ensuring the stability of the circuit operation.

The above-mentioned technical problems of the present disclosure are mainly solved by the following technical solutions: a current sampling circuit based on a bridge circuit, which can comprise a rectifier circuit, comprising a first rectifier bridge arm formed by making a first switch tube and a second diode connected in series, and a second rectifier bridge arm formed by a second switch tube and a first diode connected in series, wherein the first rectifier bridge arm and the second rectifier bridge arm are connected in parallel, a common node of the first switch tube and the second diode forms a midpoint of the first rectifier bridge arm, and a common node of the second switch tube and the first diode forms a midpoint of the second rectifier bridge arm; a detection resistor unit, connected in parallel with the first rectifier bridge arm and the second rectifier bridge arm; a current transformer, comprising a primary winding and a secondary winding, wherein a first end of the secondary winding is connected to the midpoint of the first rectifier bridge arm, a second end of the secondary winding is connected to the midpoint of the second rectifier bridge arm, and the primary winding is connected with the bridge circuit; and a controller, configured to output a switch control signal to control the working of the switch tubes in the rectifier circuit, so that the current sampling circuit executes one of the following working modes: a first working mode, in which one of the first switch tube and the second switch tube is conducted, a body diode of the other is conducted, and a current loop formed by the first switch tube, the second switch tube and the secondary winding bypasses the detection resistor unit; a second working mode, in which the first switch tube and the first diode are conducted, and a current loop formed by the first diode, the detection resistor unit, the first switch tube and the secondary winding forms a voltage detection VR1 on the detection resistor unit, so as to realize current sampling; and a third working mode, in which the second switch tube and the second diode are conducted, and a current loop formed by the second diode, the detection resistor unit, the second switch tube and the secondary winding forms a voltage detection VR1 on the detection resistor unit, so as to realize current sampling. The current flow direction of the sampling circuit is controlled by the controller, so that the sampling resistor does not sample the induced current, but only the forward current, so as to achieve accurate sampling of the transformer current waveform, and achieve high-precision, low-delay and low-cost current sampling, thereby avoiding sampling the induced current of transformer and ensuring the stability of the circuit operation.

As a preference, the bridge circuit may comprise a primary side circuit and a secondary side circuit, wherein the primary side circuit may comprise: a bus capacitor, two ends of which are connected to a DC voltage; a bridge switch unit, comprising a first bridge arm and a second bridge arm, wherein the first bridge arm and the second bridge arm are connected in parallel to form a first end and a second end of the bridge switch unit, and a first end of the bus capacitor is connected to a first end of the bridge switch unit, a second end of the bus capacitor is connected to a second end of the bridge switch unit, at least one of the first bridge arm and the second bridge arm comprises two switch tubes connected in series, and the controller further outputs a switch control signal for controlling the operation of the switch tubes in the bridge switch unit; and a primary winding of a main transformer having a first end connected to a midpoint of the first bridge arm, and a second end connected to a midpoint of the second bridge arm; and the secondary side circuit may comprise: a secondary winding of the main transformer, wherein the secondary winding of the main transformer is connected to a synchronous rectifier unit. The bridge switch unit may comprise a full bridge circuit and a half bridge circuit, and MOS transistors or capacitors can be selected according to requirements, thereby effectively reducing costs.

As a preference, the primary winding of the current transformer may be connected between the midpoint of the first bridge arm of the bridge switch unit and the first end of the primary winding of the main transformer.

As a preference, the primary winding of the sampling transformer may be connected between the midpoint of the second bridge arm of the bridge switch unit and the second end of the primary winding of the transformer.

As a preference, the primary winding of the current transformer may be connected between the first end of the bus capacitor and the first end of the bridge switch unit.

As a preference, the primary winding of the current transformer may be connected between the second end of the bus capacitor and the second end of the bridge switch unit.

As a preference, the primary winding of the current transformer may be connected to a dotted terminal of a secondary winding of a sampling transformer.

As a preference, the primary winding of the current transformer may be connected with a different terminal of a secondary winding of the current transformer.

As a preference, when the controller outputs the switch control signal to control the bridge switch unit to work, the controller can simultaneously control the first switch tube or the second switch tube in the rectifier circuit to be conducted, and when the synchronous rectifier unit of the secondary side is turned on, the current sampling circuit executes the first working mode, so that when the synchronous rectifier unit of the secondary side is turned on, the synchronous rectifier unit turned on generates an induced current in a primary side circuit, which generates an induced current in a first direction in a secondary winding of the current transformer with the induced current in the first direction consumed by a current loop formed by the first switch tube, the second switch tube and the secondary winding; and when a current flowing through the primary side circuit is switched to be opposite to the induced current, the secondary winding of the current transformer generates an induced current in a second direction, and the second direction is opposite to the first direction, and the current sampling circuit executes the second working mode or the third working mode to form a voltage detection VR1 on the detection resistor unit, so as to realize current sampling. Through control of different working modes by the controller, it avoids sampling the induced current of transformer and ensures the stability of circuit working.

As a preference, when the controller outputs the switch control signal to control the bridge switch unit to work, the controller can simultaneously control the first switch tube or the second switch tube in the rectifier circuit to be conducted, and when the synchronous rectifier unit of the secondary side is turned on, the current sampling circuit executes the first working mode, so that when the synchronous rectifier unit of the secondary side is turned on, the synchronous rectifier unit turned on generates an induced current in a primary side circuit, which generates an induced current in a first direction in a secondary winding of the current transformer with the induced current in the first direction consumed by a current loop formed by the first switch tube, the second switch tube and the secondary winding; and when a current flowing through the primary side circuit is switched to be opposite to the induced current, the secondary winding of the current transformer generates an induced current in a second direction, and the second direction is opposite to the first direction, and the current sampling circuit executes the second working mode or the third working mode to form a voltage detection VR1 on the detection resistor unit, so as to realize current sampling. Through control of different working modes by the controller, it avoids sampling the induced current of transformer and ensures the stability of circuit working.

The beneficial effects of the present disclosure at least include: the controller controls the bridge switch unit and the switch tube(s) of the rectifier circuit, which prevents the problem of reverse current occurring on the primary side of the transformer caused by the turning-on of the secondary-side synchronous rectifier, effectively protects the circuit safety, and can control the interval of current sampling, so as to avoid sampling the induced current of the transformer and ensure the stability of the circuit operation.

### Brief Description of Drawings

In order to illustrate technical solutions of the embodiments of the present disclosure more clearly, the drawings to be used in the embodiment of present disclosure will be briefly introduced below, it should be understood that the following drawings only show some embodiments of the present disclosure, and therefore should not be regarded as a limitation of the scope, and for those ordinarily skilled in the art, other relevant drawings can also be obtained in light of these drawings, without using any inventive efforts.
FIG. 1 is a circuit schematic view of a current sampling circuit according to an embodiment of the present disclosure.
FIG. 2 is a circuit schematic view of the current sampling circuit based on a bridge circuit according to a first embodiment of the present disclosure, in a first working mode.
FIG. 3 is a circuit schematic view of the current sampling circuit based on the bridge circuit according to the first embodiment of the present disclosure, in a second working mode.
FIG. 4 is a circuit schematic view of the current sampling circuit based on the bridge circuit according to the first embodiment of the present disclosure, in a third working mode.
FIG. 5 is a circuit schematic view of the current sampling circuit based on the bridge circuit according to the first embodiment of the present disclosure, in a fourth working mode.
FIG. 6 is a circuit schematic view of the current sampling circuit based on the bridge circuit according to a second embodiment of the present disclosure.
FIG. 7 is a circuit schematic view of the current sampling circuit based on the bridge circuit according to a third embodiment of the present disclosure.
FIG. 8 is a working principle diagram of a controller according to the embodiment of the present disclosure.
FIG. 9 is a circuit schematic view of the current sampling circuit based on the bridge circuit according to a fourth embodiment of the present disclosure.

### Reference signs in drawings:

1. controller, 2. rectifier circuit, 3. full bridge switch unit, 4. synchronous rectifier unit.

### Detailed Description of Embodiments

In order to make the purpose, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are a part of the embodiments of the present disclosure, but not all of the embodiments. Generally, the components of the embodiments of the present disclosure described and shown in the drawings herein may be arranged and designed in various different configurations.

Therefore, the following detailed description of the embodiments of the present disclosure provided in the drawings is not intended to limit the claimed scope of the present disclosure, but merely represents selected embodiments of the present disclosure. Based on the embodiments in the present disclosure, all other embodiments, obtained by those ordinary skilled in the art without making inventive effort, fall within the protection scope of the present disclosure.

It should be noted that similar reference numerals and letters indicate similar items in the following drawings, therefore, once a certain item is defined in one drawing, it does not need to be further defined and explained in the subsequent drawings.

In the description of the present disclosure, it should be noted that the terms "first", "second", "third", etc. are only used to distinguish descriptions, but should not be construed as indicating or implying importance in relativity.

The technical solutions of the present disclosure will be further described in detail below through embodiments and in conjunction with the drawings.

In order to better describe and understand the flow direction of current in the circuit, the present disclosure uses gray line to indicate some circuit elements in the circuit principle diagram, and the arrows in the figure indicate the flow directions of the currents.

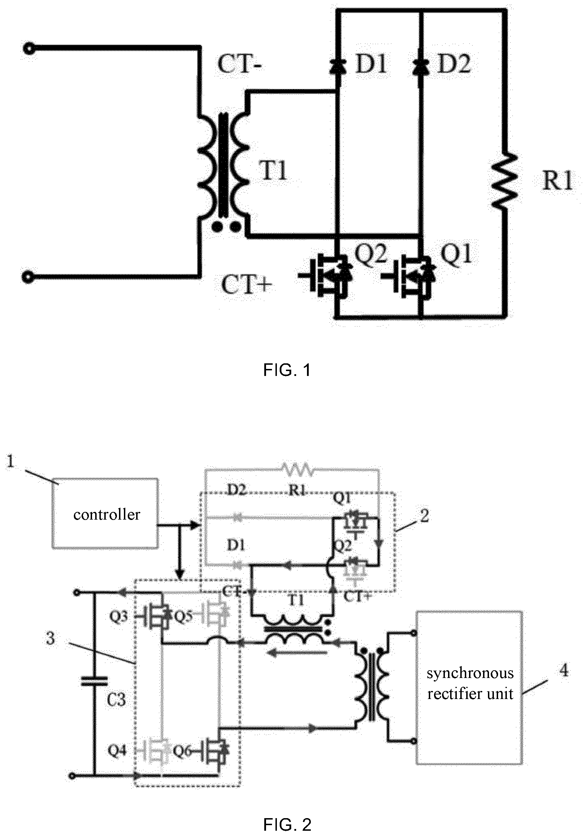

Embodiment 1: a current sampling circuit based on a bridge circuit may comprise a rectifier circuit 2, wherein the rectifier circuit may comprise a first rectifier bridge arm formed by a first switch tube Q1 and a second diode D2 connected in series, and a second rectifier bridge arm formed by a second switch tube Q2 and a first diode D1 connected in series, wherein the first rectifier bridge arm and the second rectifier bridge arm are connected in parallel, a common node of the first switch tube and the second diode forms a midpoint of the first rectifier bridge arm, and a common node of the second switch tube and the first diode forms a midpoint of the second rectifier bridge arm; a detection resistor unit (detection resistor R1 as shown in FIG. 1), connected in parallel with the first rectifier bridge arm and the second rectifier bridge arm; a current transformer T1, comprising a primary winding and a secondary winding, wherein a first end of the secondary winding is connected to the midpoint of the first rectifier bridge arm, and a second end of the secondary winding is connected to the midpoint of the second rectifier bridge arm; the primary winding is connected with the bridge circuit; and a controller 1, configured to output a switch control signal to control the operation of the switch tubes in the rectifier circuit, so that the current sampling circuit executes one of the following working modes: a first working mode, in which one of the first switch tube and the second switch tube is conducted, and a body diode of the other is conducted, and a current loop formed by the first switch tube, the second switch tube and the secondary winding bypasses the detection resistor unit; a second working mode, in which the first switch tube and the first diode are conducted, and a current loop formed by the first diode, the detection resistor unit, the first switch tube and the secondary winding forms a voltage detection VR1 on the detection resistor unit, so as to realize current sampling; and a third working mode, in which the second switch tube and the second diode are conducted, and a current loop formed by the second diode, the detection resistor unit, the second switch tube and the secondary winding forms a voltage detection VR1 on the detection resistor unit, so as to realize current sampling.

The bridge circuit may comprise a primary side circuit and a secondary side circuit; the primary side circuit may comprise: a bus capacitor C3, two ends of which are connected to a DC voltage; a bridge switch unit, comprising a first bridge arm and a second bridge arm, wherein the first bridge arm and the second bridge arm are connected in parallel to form a first end and a second end of the bridge switch unit, and a first end of the bus capacitor C3 is connected to a first end of the bridge switch unit, a second end of the bus capacitor C3 is connected to a second end of the bridge switch unit, the first bridge arm and the second bridge arm each comprise two switch tubes connected in series, and the controller further outputs a switch control signal for controlling the operation of the switch tubes in the bridge switch unit; and a primary winding of a main transformer having a first end connected to a midpoint of the first bridge arm, and a second end connected to a midpoint of the second bridge arm; and the secondary side circuit may comprise: a secondary winding of the main transformer, wherein the secondary winding of the main transformer is connected to a synchronous rectifier unit 4.

Specifically, as shown in FIG. 1 and FIG. 2, the bridge circuit as a full bridge circuit is taken as an example, which comprises bus capacitor C3, controller 1, MOS tube Q3, MOS tube Q4, MOS tube Q5, MOS tube Q6 and the main transformer, wherein two ends of the bus capacitor C3 are connected to the DC voltage, the first end of the bus capacitor C3 is also connected to the D pole of the MOS tube Q3 and the D pole of the MOS tube Q5 respectively, and the second end of the bus capacitor C3 is also connected to the S pole of the MOS tube Q4 and the S pole of the MOS tube Q6 respectively, the S pole of the MOS tube Q3 is connected with the D pole of the MOS tube Q4 to form the first bridge arm of the full bridge switch unit, and the connection point between the S pole of the MOS tube Q3 and the D pole of the MOS tube Q4 constitutes the midpoint of the first bridge arm, the S pole of the MOS tube Q5 is connected with the D pole of the MOS tube Q6 to form the second bridge arm of the full bridge switch unit 3, and the connection point between the S pole of the MOS tube Q5 and the D pole of the MOS tube Q6 constitutes the midpoint of the second bridge arm, the first end of the primary winding of the main transformer is connected to the midpoint of the first bridge arm, the second end of the primary winding of the main transformer is connected to the midpoint of the second bridge arm, and the two ends of the secondary winding of the main transformer are connected to the synchronous rectifier unit 4, and the MOS tube Q3, the MOS tube Q4, the MOS tube Q5 and the MOS tube Q6 constitute the bridge switch unit 3. The bus capacitor C3, the bridge switch unit 3 and the primary winding of the main transformer constitute the primary side circuit of the bridge circuit, and the secondary winding of the main transformer and the synchronous rectifier unit 4 constitute the secondary side circuit of the bridge circuit. The current sampling circuit includes MOS tube Q1, MOS tube Q2, diode D1, diode D2, sampling resistor R1 and current transformer T1, one end of the secondary winding of the current transformer T1 is respectively connected to the anode of the diode D1 and the D pole of the MOS tube Q2, the cathode of the diode D1 is connected to the cathode of the diode D2 and the first end of the sampling resistor R1 respectively. The S pole of the MOS tube Q2 is respectively connected to the S pole of the MOS tube Q1 and the second end of the sampling resistor R1. The other end of the secondary winding of the current transformer T1 is respectively connected to the anode of the diode D2 and the D pole of the MOS tube Q1. The diode D1 and the MOS tube Q2 constitute the second rectifier bridge arm of the rectifier circuit 2, and the diode D2 and the MOS tube Q1 constitute the first rectifier bridge arm of the CT rectifier circuit. The G poles of MOS tube Q1, MOS tube Q2, MOS tube Q3, MOS tube Q4, MOS tube Q5 and MOS tube Q6 are all connected to the controller, and the turn-on and turn-off of the MOS tube Q1, MOS tube Q2, MOS tube Q3, MOS tube Q4, MOS tube Q5, and MOS tube Q6 are controlled by the controller.

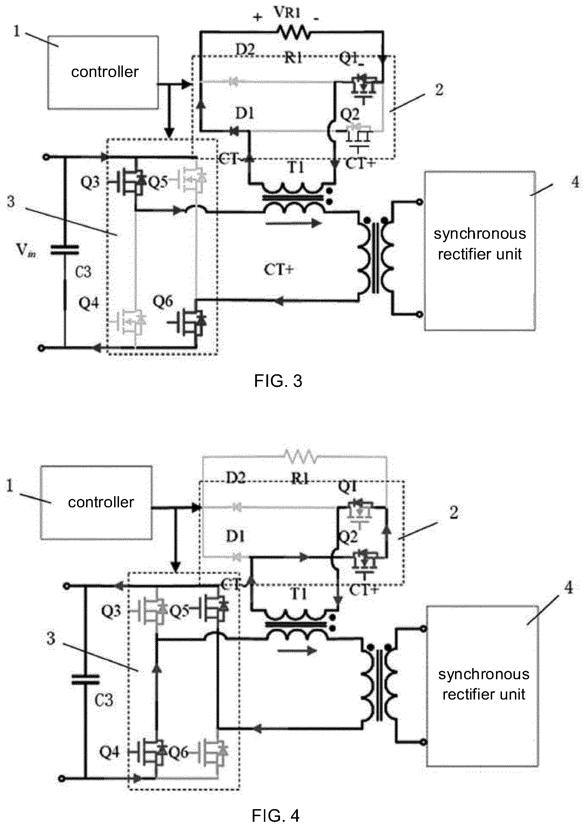

In this embodiment, the primary winding of the current transformer T1 is connected to a dotted terminal of the secondary winding of the current transformer T1, and the primary winding of the current transformer T1 is connected between the midpoint of the first bridge arm and the primary winding of the transformer; when the controller controls the MOS tube Q3 and the MOS tube Q6 to be conducted, it simultaneously controls the MOS tube Q1 to be conducted synchronously (that is, the MOS tube Q3, the MOS tube Q6 and the MOS tube Q1 receive the same control signal), and if the secondary-side synchronous rectifier unit is turned on at this time, the induced current will flow through the primary-side circuit (as shown by the arrow in FIG. 2, which can also be called negative current), at this time, the primary-side current of the current transformer T1 flows in from the dotted terminal, and the secondary-side current of the current transformer T1 flows out from the dotted terminal. Since the MOS tube Q1 is conducted, the body diode of the MOS tube Q2 is conducted by the forward voltage, then a loop is formed by the secondary winding of the current transformer T1, the MOS tube Q1 and the body diode of the MOS tube Q2, so that the secondary current of the T1 will not flow through the sampling resistor R1, so the controller will not sample the secondary-side current of the T1 to avoid sampling of the negative current occurring on the primary winding of the main transformer due to the turning-on of the secondary-side synchronous rectifier of the current transformer T1, which leads to the triggering of the peak current control in advance, and results in the risk of shutoff of the driver in advance, and then the current of the primary side circuit turns under the action of the input voltage to be in direction opposite to that of the induced current (as shown by the arrow in FIG. 3, which can also be called forward current), at this time, the primary-side current of the current transformer T1 flows out from the dotted terminal, and the secondary-side current of the current transformer T1 flows in from the dotted terminal, the secondary-side current being opposite to the current flowing through the secondary winding of the current transformer T1 in FIG. 2, wherein since MOS tube Q1 is conducted, the body diode of the MOS tube Q2 is shut off by the reverse voltage, then the current will pass through the diode D1, the sampling resistor R1, the MOS tube Q1 and the secondary winding of the current transformer T1 to form a loop, and form a voltage VR1 on the sampling resistor R1, and the controller samples the voltage to obtain the primary-side current of the bridge circuit. Therefore, the current sampling circuit can only sample the positive current value of the primary side to realize the control of the current sampling interval, so as to avoid sampling the negative current of the primary side and ensure the stability of the peak current control.

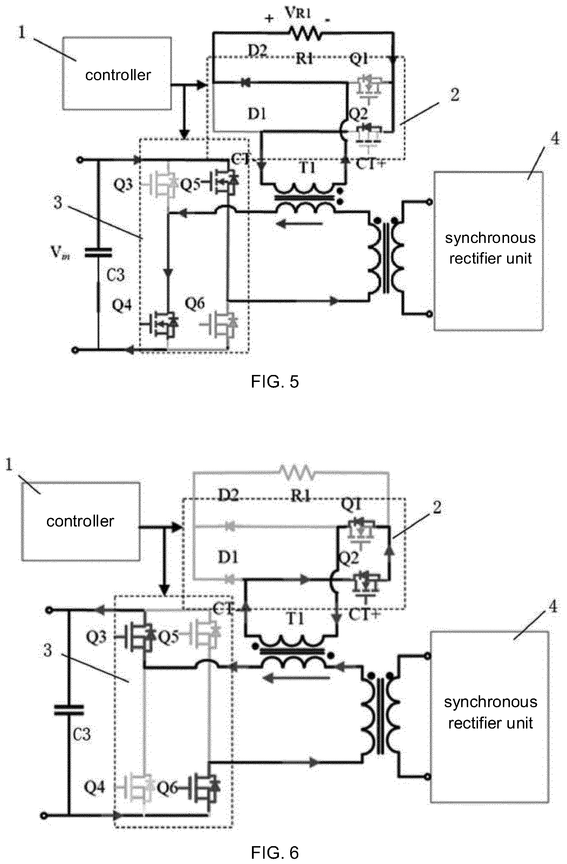

As shown in FIG. 4, when the controller controls the MOS tube Q4 and the MOS tube Q5 to be conducted, it simultaneously controls the MOS tube Q2 to be conducted synchronously (that is, the MOS tube Q4, the MOS tube Q5 and the MOS tube Q2 receive the same control signal), wherein if the secondary-side synchronous rectifier unit is turned on at this time, the induced current will flow through the primary side circuit (as shown by the arrow in FIG. 4, which can also be called negative current), at this time, the primary-side current of the current transformer T1 flows out from the dotted terminal, and the secondary-side current of the current transformer T1 flows in from the dotted terminal. Since the MOS tube Q2 is conducted, the body diode of the MOS tube Q1 is conducted by the forward voltage, then a loop is formed by the secondary winding of the current transformer T1, the MOS tube Q2 and the body diode of MOS tube Q1, so that the secondary-side current of the T1 will not flow through the sampling resistor R1, so the controller will not sample the secondary-side current of the T1 to avoid sampling the negative current occurring on the primary side of the transformer due to the turning-on of the secondary-side synchronous rectifier of the current transformer T1, which leads to the triggering of peak current control in advance, and results in the risk of shut-off of driver in advance, and then the current of the primary side circuit turns under the action of the input voltage to be in a direction opposite to that of the induced current (as shown by the arrow in FIG. 5, which is also called as the forward current), at this time, the primary-side current of the current transformer T1 flows in from the dotted terminal, and the secondary-side current of the current transformer T1 flows out from the dotted terminal. Since the MOS tube Q2 is conducted, the body diode of the MOS tube Q1 is shut off by the reverse voltage, then the current will pass through the diode D2, the sampling resistor R1, the MOS tube Q2 and the secondary winding of the current transformer T1 to form a loop, and form a voltage VR1 on the sampling resistor R1, the controller samples the voltage to obtain the primary-side current of the bridge circuit. Therefore, the current sampling circuit can only sample the positive current value of the primary side to realize the control of the current sampling interval, so as to avoid sampling the negative current of the primary side and ensure the stability of the peak current control.

Embodiment 2, a current sampling circuit based on a bridge circuit, the difference between this embodiment and the embodiment 1 is that: the primary winding of the current transformer T1 in this embodiment is connected with the different terminal of the secondary winding of the current transformer T1, and the rest of the structure is the same as that of the embodiment 1. In this embodiment, when the controller controls the MOS tube Q3 and the MOS tube Q6 to be conducted, it simultaneously controls the MOS tube Q2 to be conducted synchronously (that is, the MOS tube Q3, MOS tubes Q6 and Q2 receive the same control signal), if the secondary-side synchronous rectifier is turned on at this time, the primary side circuit will flow through the induced current (as shown by the arrow in FIG. 6, which can also be called negative current), at this time, the primary-side current of the current transformer T1 flows in from the dotted terminal, and the secondary-side current of the current transformer T1 flows out from the dotted terminal. Since the MOS tube Q2 is conducted, the body diode of the MOS tube Q1 is conducted by the forward voltage, then a loop is formed by the secondary winding of the current transformer T1, the MOS tube Q2 and the body diode of the MOS tube Q1, so that the secondary-side current of the T1 will not flow through the sampling resistor R1, so the controller will not sample the secondary-side current of the T1 to avoid sampling the negative current occurring on the primary side of the transformer due to the tuning-on of the secondary-side synchronous rectifier, which leads to the triggering of peak current control in advance, and results in the risk of shut off of driver in advance, and then the current of the primary side circuit turns under the action of the input voltage to be in a direction opposite to that of the induced current (which is also called as the forward current), at this time, the primary-side current of the current transformer T1 flows out from the dotted terminal, the primary-side current being opposite to the current flowing through the secondary winding of the current transformer T1 in FIG. 6, and the secondary-side current of the current transformer T1 flows in from the dotted terminal. Since the MOS tube Q2 is conducted, the body diode of the MOS tube Q1 is shut off by the reverse voltage, then the current will pass through the diode D2, the sampling resistor R1, the MOS tube Q2 and the secondary winding of the current transformer T1 to form a loop, and form a voltage VR1 on the sampling resistor R1, the controller samples the voltage to obtain the primary-side current of the bridge circuit. Therefore, the current sampling circuit can only sample the positive current value of the primary side, so as to avoid sampling the negative current of the primary side and ensure the stability of the peak current control.

When the controller controls the MOS tube Q4 and the MOS tube Q5 to be conducted, it simultaneously controls the MOS tube Q1 to be conducted synchronously (that is, the MOS tube Q4, MOS tube Q5 and MOS tube Q1 receive the same control signal), wherein if the secondary-side synchronous rectifier is turned on at this time, the induced current will flow through the primary side circuit (which can also be called negative current), at this time, the primary-side current of the current transformer T1 flows out from the dotted terminal, and the secondary-side current of the current transformer T1 flows in from the dotted terminal. Since the MOS tube Q1 is conducted, the body diode of the MOS tube Q2 is conducted by the forward voltage, then a loop is formed by the secondary winding of the current transformer T1, the MOS tube Q1 and the body diode of the MOS tube Q2, so that the secondary-side current of the T1 will not flow through the sampling resistor R1, so the controller will not sample the secondary-side current of the T1 to avoid sampling the negative current occurring on the primary side of the transformer due to the turning-on of the secondary-side synchronous rectifier, which leads to the triggering of peak current control in advance, and results in the risk of shut off of driver in advance, and then the current of the primary side circuit turns under the action of the input voltage to be in a direction opposite to that of the induced current (which is also called as the forward current), at this time, the primary-side current of the current transformer T1 flows in from the dotted terminal, and the secondary-side current of the current transformer T1 flows out from the dotted terminal. Since the MOS tube Q1 is conducted, the body diode of the MOS tube Q2 is shut off by the reverse voltage, then the current will pass through the diode D1, the sampling resistor R1, the MOS tube Q1 and the secondary winding of the current transformer T1 to form a loop, and form a voltage VR1 on the sampling resistor R1, the controller samples the voltage to obtain the primary-side current of the bridge circuit. Therefore, the current sampling circuit can only sample the positive current value of the primary side, so as to avoid sampling the negative current of the primary side of the transformer and ensure the stability of the peak current control.

In this embodiment, whether the MOS tube Q3 and the MOS tube Q6 of the full bridge circuit are conducted to operate or the MOS tube Q4 and the MOS tube Q5 are conducted to operate, by controlling the current sampling interval, the current sampling circuit can only sample the positive current value of the primary side, so as to avoid sampling the negative current value of the primary side and ensure the stability of the peak current control.

Embodiment 3, in this embodiment, the dotted terminal of the primary winding of the current transformer T1 is connected to the primary winding of the transformer, and the primary winding of the current transformer T1 is connected between the primary winding of the transformer and the midpoint of the second bridge arm of the full bridge circuit, the current transformer T1 is connected to the dotted terminal, and the rest of the circuit connection structure is the same as that of the embodiment 1.

Embodiment 4, in this embodiment, the dotted terminal of the primary winding of the current transformer T1 is connected to the primary winding of the transformer, and the primary winding of the current transformer T1 is connected between the primary winding of the transformer and the midpoint of the second bridge arm of the full bridge circuit, the current transformer T1 is connected to the different terminal, and the rest of the circuit connection structure is the same as that of the embodiment 1.

Embodiment 5, in this embodiment, the different terminal of the primary winding of the current transformer T1 is connected to the primary winding of the transformer, and the primary winding of the current transformer T1 is connected between the primary winding of the transformer and the midpoint of the first bridge arm of the full bridge circuit, the current transformer T1 is connected to the dotted terminal, and the rest of the circuit connection structure is the same as that of the embodiment 1.

Embodiment 6, in this embodiment, the different terminal of the primary winding of the current transformer T1 is connected to the primary winding of the transformer, and the primary winding of the current transformer T1 is connected between the primary winding of the transformer and the midpoint of the first bridge arm of the full bridge circuit, the current transformer T1 is connected to the different terminal, and the rest of the circuit connection structure is the same as that of the embodiment 1.

Embodiment 7, in this embodiment, the different terminal of the primary winding of the current transformer T1 is connected to the primary winding of the transformer, and the primary winding of the current transformer T1 is connected between the primary winding of the transformer and the midpoint of the second bridge arm of the full bridge circuit, the current transformer T1 is connected to the dotted terminal, and the rest of the circuit connection structure is the same as that of the embodiment 1.

Embodiment 8, in this embodiment, the different terminal of the primary winding of the current transformer T1 is connected to the primary winding of the transformer, and the primary winding of the current transformer T1 is connected between the primary winding of the transformer and the midpoint of the second bridge arm of the full bridge circuit, the current transformer T1 is connected to the different terminal, and the rest of the circuit connection structure is the same as that of the embodiment 1.

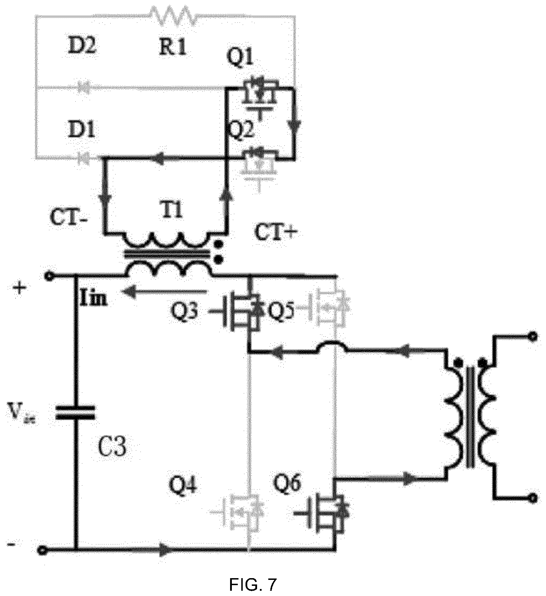

Embodiment 9, as shown in FIG. 7, the dotted terminal of the primary winding of the current transformer T1 in this embodiment is connected to the positive end of the bus capacitor C3, and the primary winding of the current transformer T1 is connected between the positive end of the bus capacitor C3 and the full bridge circuit, the current transformer T1 is connected to the dotted terminal, and the rest of the circuit connection structure is the same as that of the embodiment 1.

Embodiment 10, in this embodiment, the different terminal of the primary winding of the current transformer T1 is connected to the positive end of the bus capacitor C3, and the primary winding of the current transformer T1 is connected between the positive end of the bus capacitor C3 and the full bridge circuit, the current transformer T1 is connected to the dotted terminal, and the rest of the circuit connection structure is the same as that of the embodiment 1.

Embodiment 11, in this embodiment, the dotted terminal of the primary winding of the current transformer T1 is connected to the positive end of the bus capacitor C3, and the primary winding of the current transformer T1 is connected between the positive end of the bus capacitor C3 and the full bridge circuit, the current transformer T1 is connected to the different terminal, and the rest of the circuit connection structure is the same as that of the embodiment 1.

Embodiment 12, in this embodiment, the different terminal of the primary winding of the current transformer T1 is connected to the positive end of the bus capacitor C3, and the primary winding of the current transformer T1 is connected between the positive end of the bus capacitor C3 and the full bridge circuit, the current transformer T1 is connected to the different terminal, and the rest of the circuit connection structure is the same as that of the embodiment 1.

Embodiment 13, the dotted terminal of the primary winding of the current transformer T1 in this embodiment is connected to the negative end of the bus capacitor C3, and the primary winding of the current transformer T1 is connected between the negative end of the bus capacitor C3 and the full bridge circuit, the current transformer T1 is connected to the dotted terminal, and the rest of the circuit connection structure is the same as that of the embodiment 1.

Embodiment 14, in this embodiment, the different terminal of the primary winding of the current transformer T1 is connected to the negative end of the bus capacitor C3, and the primary winding of the current transformer T1 is connected between the negative end of the bus capacitor C3 and the full bridge circuit, the current transformer T1 is connected to the dotted terminal, and the rest of the circuit connection structure is the same as that of the embodiment 1.

Embodiment 15, in this embodiment, the dotted terminal of the primary winding of the current transformer T1 is connected to the negative end of the bus capacitor C3, and the primary winding of the current transformer T1 is connected between the negative end of the bus capacitor C3 and the full bridge circuit, the current transformer T1 is connected to the different terminal, and the rest of the circuit connection structure is the same as that of the embodiment 1.

Embodiment 16, in this embodiment, the different terminal of the primary winding of the current transformer T1 is connected to the negative end of the bus capacitor C3, and the primary winding of the current transformer T1 is connected between the negative end of the bus capacitor C3 and the full bridge circuit, the current transformer T1 is connected to the different terminal, and the rest of the circuit connection structure is the same as that of the embodiment 1.

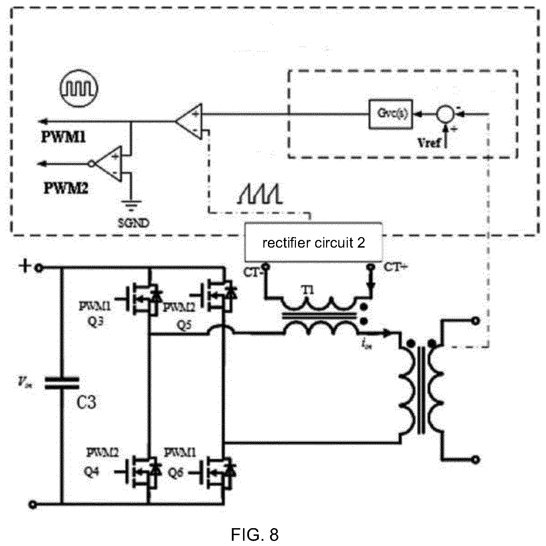

In another embodiment, as shown in FIG. 8, the controller is a typical peak current controller, which samples the output voltage of the full bridge circuit to obtain the reference current of the peak current, and obtains the switch drive signals of the MOS tube Q3 and the MOS tube Q6 and the switch drive signals of the MOS tube Q4 and the MOS tube Q5 by comparing it with the voltage value sampled by the current sampling circuit, and simultaneously outputs the switch drive signals of MOS tube Q3 and MOS tube Q6 and the switch drive signals of MOS tube Q4 and MOS tube Q5 to a certain switch tube in the rectifier circuit, so that when there is a negative current on the primary side of the full bridge circuit, the MOS tube Q1 is conducted, so that the body diode of the MOS tube Q2 is conducted by the forward voltage, and a loop is formed by the secondary winding of the current transformer T1, MOS tube Q1 and the body diode of the MOS tube Q2, so that the secondary-side current of T1 will not flow through the sampling resistor R1, and when the primary side of the full bridge circuit is a forward current, the MOS tube Q1 is conducted, so that the body diode of the MOS tube Q2 is shut off by the reverse voltage, the secondary-side current of T1 will pass through the diode D1, sampling resistor R1, MOS tube Q1 and the secondary winding of current transformer T1 to form a loop, so that the controller only samples the forward peak current that is opposite to the induced current, thus the primary side current waveform is accurately sampled.

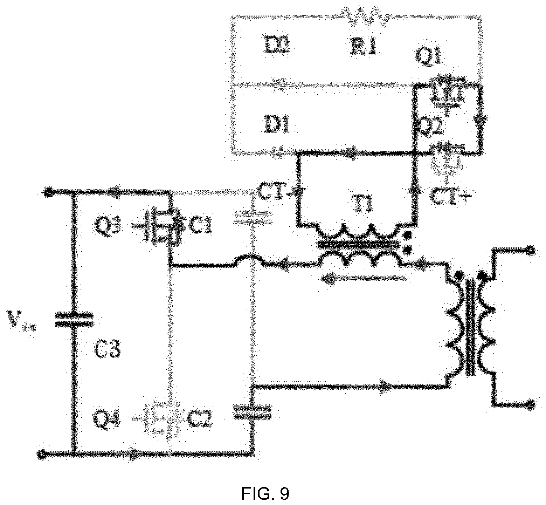

In another embodiment, as shown in FIG. 9, the bridge switch unit is a half bridge circuit, and the MOS tube Q5 and MOS tube Q6 of the second bridge arm are replaced by capacitor C1 and capacitor C2, and the rest of the circuit connection structure is the same as that of the embodiment 1, specific working principle thereof will not be repeated here.

In the above-mentioned embodiments, whether it is a full bridge circuit or a half bridge circuit, whether the MOS tube Q3 and the MOS tube Q6 of the full bridge circuit are conducted to operate or the MOS tube Q4 and the MOS tube Q5 are conducted to operate, or the circuit can perform other forms of transformation, they all may control the interval of current sampling, and the current sampling circuit can only sample the positive current value, so as to avoid sampling the negative current of the primary side and ensure the stability of the peak current control.

The above-mentioned embodiments are only preferred solutions of the present disclosure, and do not limit the present disclosure in any form, and there are other variations and modifications under the premise of not exceeding the technical solutions recorded in the claims.

### Industrial Applicability

The present disclosure discloses a current sampling circuit based on a bridge circuit, which comprises a first rectifier bridge arm formed by a first switch tube and a second diode connected in series, and a second rectifier bridge arm formed by a second switch tube and a first diode connected in series, wherein the first rectifier bridge arm and the second rectifier bridge arm are connected in parallel, a common node of the first switch tube and the second diode forms a midpoint of the first rectifier bridge arm, and a common node of the second switch tube and the first diode forms a midpoint of the second rectifier bridge arm; a detection resistor unit is connected in parallel with the first rectifier bridge arm and the second rectifier bridge arm. In the present disclosure, the peak current controller is used to control the switching tubes of the bridge unit and the rectifier circuit, which prevents the problem of reverse current occurring on the primary side of the transformer caused by the turning-on of the secondary side synchronous rectifier, effectively protects the circuit safety, and can control the interval of current sampling, so as to avoid sampling the negative current of the transformer and ensure the stability of the circuit operation.

Furthermore, it is understood that a current sampling circuit based on bridge circuit of the present disclosure is reproducible and can be used in a variety of industrial applications. For example, a current sampling circuit based on bridge circuit of the present disclosure can be used in the technical field of power electronics.

## Claims

1. A current sampling circuit based on a bridge circuit, **characterized by** comprising:
a rectifier circuit, comprising a first rectifier bridge arm formed by a first switch tube and a second diode connected in series, and a second rectifier bridge arm formed by a second switch tube and a first diode connected in series, wherein the first rectifier bridge arm and the second rectifier bridge arm are connected in parallel, a common node of the first switch tube and the second diode forms a midpoint of the first rectifier bridge arm, and a common node of the second switch tube and the first diode forms a midpoint of the second rectifier bridge arm;
a detection resistor unit, connected in parallel with the first rectifier bridge arm and the second rectifier bridge arm;
a current transformer, comprising a primary winding and a secondary winding, wherein a first end of the secondary winding is connected to the midpoint of the first rectifier bridge arm, and a second end of the secondary winding is connected to the midpoint of the second rectifier bridge arm, and the primary winding is connected with the bridge circuit; and
a controller, configured to output a switch control signal to control operation of the switch tubes in the rectifier circuit, so that the current sampling circuit executes one of following working modes:
a first working mode, in which one of the first switch tube and the second switch tube is conducted, and a body diode of the other is conducted, and a current loop formed by the first switch tube, the second switch tube and the secondary winding bypasses the detection resistor unit;
a second working mode, in which the first switch tube and the first diode are conducted, and a current loop formed by the first diode, the detection resistor unit, the first switch tube and the secondary winding forms a voltage detection VR1 on the detection resistor unit, so as to realize current sampling; and
a third working mode, in which the second switch tube and the second diode are conducted, and a current loop formed by the second diode, the detection resistor unit, the second switch tube and the secondary winding forms a voltage detection VR1 on the detection resistor unit, so as to realize current sampling.

2. The current sampling circuit based on a bridge circuit according to claim 1, wherein the bridge circuit comprises a primary side circuit and a secondary side circuit;
the primary side circuit comprises:
a bus capacitor, two ends of which are connected to a DC voltage;
a bridge switch unit, comprising a first bridge arm and a second bridge arm, wherein the first bridge arm and the second bridge arm are connected in parallel to form a first end and a second end of the bridge switch unit, and a first end of the bus capacitor is connected to the first end of the bridge switch unit, a second end of the bus capacitor is connected to the second end of the bridge switch unit, at least one of the first bridge arm and the second bridge arm comprises two switch tubes connected in series, and the controller further outputs a switch control signal for controlling operation of the switch tubes in the bridge switch unit; and
a primary winding of a main transformer, having a first end connected to a midpoint of the first bridge arm, and a second end connected to a midpoint of the second bridge arm; and
the secondary side circuit comprises:
a secondary winding of the main transformer, wherein the secondary winding of the main transformer is connected to a synchronous rectifier unit.

3. The current sampling circuit based on a bridge circuit according to claim 2, wherein the primary winding of the current transformer is connected between the midpoint of the first bridge arm of the bridge switch unit and the first end of the primary winding of the main transformer.

4. The current sampling circuit based on a bridge circuit according to claim 2, wherein the primary winding of the current transformer is connected between the midpoint of the second bridge arm of the bridge switch unit and the second end of the primary winding of the main transformer.

5. The current sampling circuit based on a bridge circuit according to claim 2, wherein the primary winding of the current transformer is connected between the first end of the bus capacitor and the first end of the bridge switch unit.

6. The current sampling circuit based on a bridge circuit according to claim 2, wherein the primary winding of the current transformer is connected between the second end of the bus capacitor and the second end of the bridge switch unit.

7. The current sampling circuit based on a bridge circuit according to any one of claims 3 to 6, wherein the primary winding of the current transformer is connected to a dotted terminal of a secondary winding of a sampling transformer.

8. The current sampling circuit based on a bridge circuit according to any one of claims 3 to 6, wherein the primary winding of the current transformer is connected with a different terminal of a secondary winding of the current transformer.

9. The current sampling circuit based on a bridge circuit according to claim 7, wherein when the controller outputs the switch control signal to control the bridge switch unit to work, the controller simultaneously controls the first switch tube or the second switch tube in the rectifier circuit to be conducted, wherein when the synchronous rectifier unit of the secondary side is turned on, the current sampling circuit executes the first working mode, so that when the synchronous rectifier unit of the secondary side is turned on, the synchronous rectifier unit turned on generates an induced current in a primary side circuit, which generates an induced current in a first direction in a secondary winding of the current transformer with the induced current in the first direction consumed by a current loop formed by the first switch tube, the second switch tube and the secondary winding; and when a current flowing through the primary side circuit is switched to be opposite to the induced current, the secondary winding of the current transformer generates an induced current in a second direction, the second direction being opposite to the first direction, and the current sampling circuit executes the second working mode or the third working mode to form a voltage detection VR1 on the detection resistor unit, so as to realize current sampling.

10. The current sampling circuit based on a bridge circuit according to claim 8, wherein when the controller outputs the switch control signal to control the bridge switch unit to work, the controller simultaneously controls the first switch tube or the second switch tube in the rectifier circuit to be conducted, wherein when the synchronous rectifier unit of the secondary side is turned on, the current sampling circuit executes the first working mode, so that when the synchronous rectifier unit of the secondary side is turned on, the synchronous rectifier unit turned on generates an induced current in a primary side circuit, which generates an induced current in a first direction in a secondary winding of the current transformer with the induced current in the first direction consumed by a current loop formed by the first switch tube, the second switch tube and the secondary winding; and when a current flowing through the primary side circuit is switched to be opposite to the induced current, the secondary winding of the current transformer generates an induced current in a second direction, the second direction being opposite to the first direction, and the current sampling circuit executes the second working mode or the third working mode to form a voltage detection VR1 on the detection resistor unit, so as to realize current sampling.

11. The current sampling circuit based on a bridge circuit according to any one of claims 2 to 10, wherein the bridge switch unit comprises a full bridge circuit and a half bridge circuit.
